# EUROPEAN PATENT APPLICATION

(11) **EP 0 523 286 A1**
(43) Date of publication of application: **20.01.1993**
(21) Application number: 91201863.7
(22) Date of filing: 15.07.1991
(51) Int. Cl.: B28B 5/04, B28B 13/02, B23Q 11/08

(54) **Plant for pressing ceramic tiles in general, typically pressure-glazed tiles**

(71) Applicant: EMILCERAMICA S.P.A., I-41042 Fiorano Modenese, Modena (IT)
(72) Inventor: Battani, Francesco, I-42049 Sassuolo (IT); Leonardi Vittorio, I-42049 Sassuolo (IT); Palazzi, Ezio, I-41100 Modena (IT); Ronzoni, Gabriele, I-41011 Campogalliano (Mo) (IT); Rubbiani, Marco, I-41011 Campogalliano (Mo) (IT)
(74) Representative: Corradini, Corrado

(57) **Abstract**

A plant for pressing ceramic tiles in general comprises a ceramic press (1), the vertically movable cross-member (12) of which carries fixed to its lower side a first part (2) of a ceramic mould, whereas associated with its bed (10) there are two identical mould parts (6), (66) conjugate with the first (2) and situated on opposite sides of the vertical plane of press symmetry in which the longitudinal axis of said cross-member lies, and being driven with horizontal rectilinear to-and-fro movements perpendicular to said vertical plane of symmetry. In this manner, said two conjugate mould parts (6, 66) move mutually in the two opposing directions such that when one, (6) or (66), moves to the end of its stroke of travel for discharging the formed tiles, the other, (6) or (66), having been previously loaded at least with clay, lies below the vertically movable mould part (2), to be subjected to pressing.

## Description

This invention relates to a plant for pressing ceramic tiles in general.

More specifically, the invention is particularly but not exclusively suitable for forming or pressing pressure-glazed tiles.

As is well known, in the normal manufacturing cycle for single-fired tiles, the dry powder (6-7% moisture) is initially pressed, after which the pressed material or support is then dried and wet-glazed with a curtain of ground glaze in water (slip). In contrast, in pressure-glazing, the support powder is pressed together with the glazing powder or ceramic covering mix (coating), so eliminating the wet glazing stage. In other words, this is a method which enables two or more layers to be pressed together. With particular reference to this known pressure-glazing method, forming devices are known consisting of a rotary or turntable press, which however have proved unsatisfactory in use because of the fact that the forming cavities are filled with layers of irregular thickness, leading to well known problems when the tiles are fired, and in addition the devices are constructionally complex and hence very costly, as well as being of relatively poor reliability because of this complexity.

An object of the present invention is to provide a plant typically but not exclusively suitable for pressing pressure-glazed tiles, which is able to operate at a particularly high production rate while at the same time ensuring substantially regular and homogeneous filling of the forming cavities.

A further object of the invention is to provide a plant with considerable versatility of use.

A further object is to provide a pressing plant with which more than two superposed layers of material can be placed in the forming cavities, and with which various decorations or ornamental motifs can be applied to the top of the cavities.

Said objects are attained by a structure which is strong, reliable and of relatively low cost.

The plant according to the invention comprises a hydraulic ceramic press, the vertically movable cross-member of which carries fixed to its lower side a first part of a ceramic mould, whereas two identical mould parts conjugate with the first are associated with its bed, these being positioned on one side and the other of the vertical plane of press symmetry in which the longitudinal axis of said cross-member lies, and being driven with horizontal rectilinear to-and-fro movements perpendicular to said vertical plane of symmetry, said two conjugate mould parts moving such that when one is at the end of its return travel, at which the tiles are removed, the other is at the end of its outward travel, below the vertically movable mould part.

In addition, according to the invention, along each outward/return path of said conjugate mould parts there is situated, in an intermediate position, at least one feed device for feeding at least the clay (constituting the tile support) into the forming cavity or cavities of the respective conjugate mould part.

Thus when one of said conjugate mould parts is temporarily stationary below the vertically movable mould part (while pressing takes place), the previously formed tiles are removed from the other conjugate mould part (also temporarily stationary).

According to the invention, the clay is preferably loaded while said two conjugate mould parts are in movement (ie while they are moving towards the press), however to satisfy specific requirements or manufacturing parameters there is nothing to prevent the loading taking place while said two conjugate mould parts are kept temporarily stationary. Finally, at least one device for feeding glaze or ceramic mix in powder form can be associated with said feed device in order to produce said pressure-glazed tiles, which feed devices can also contain other materials in order to produce tiles with a multi-component support, as is well known to the expert of the art.

All the objects of the invention are attained by the aforesaid means.

In this respect, firstly a particularly high production rate is obtained, the forming cavities being charged with layers of practically regular or constant thickness.

Secondly, the plant of the invention is particularly versatile as it can be equipped with any known type of mould (as will be apparent hereinafter), either to form tiles of support or biscuit type (ie to be subsequently glazed), or to press tiles not for glazing, such as tiles of fine porcelained stoneware, or to form pressure-glazed tiles as specified in the introduction, or other tiles such as tiles with a multi-component support.

The characteristics and the constructional and functional merits of the invention will be apparent from the detailed description given hereinafter with reference to the figures of the accompanying drawings, which show some preferred embodiments thereof by way of non-limiting example.

Figures 1A and 1B are a partly sectional overall elevational view of the invention, in which thin dashed and dotted lines are used to illustrate accessories which improve the plant characteristics compared with the same plant equipped as shown by full lines.

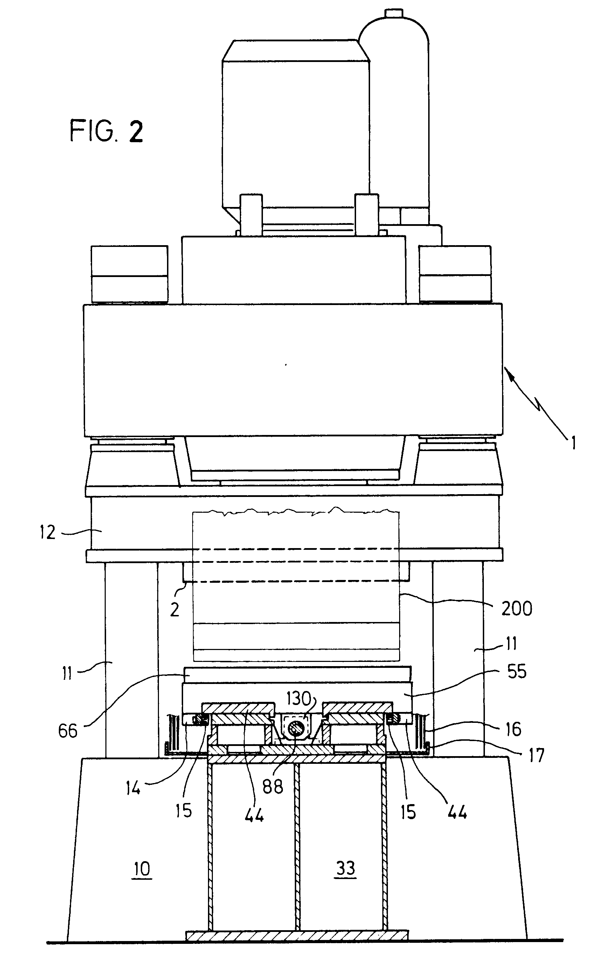

Figure 2 is a partly sectional view in the direction II of Figure 1.

Figure 3 is an overall schematic view of the invention from above, in which the top of the press is omitted and thin dashed and dotted lines are used to illustrate plant accessories of another embodiment.

Figure 4 is a view to an enlarged scale of a part of the section IV-IV of Figure 3.

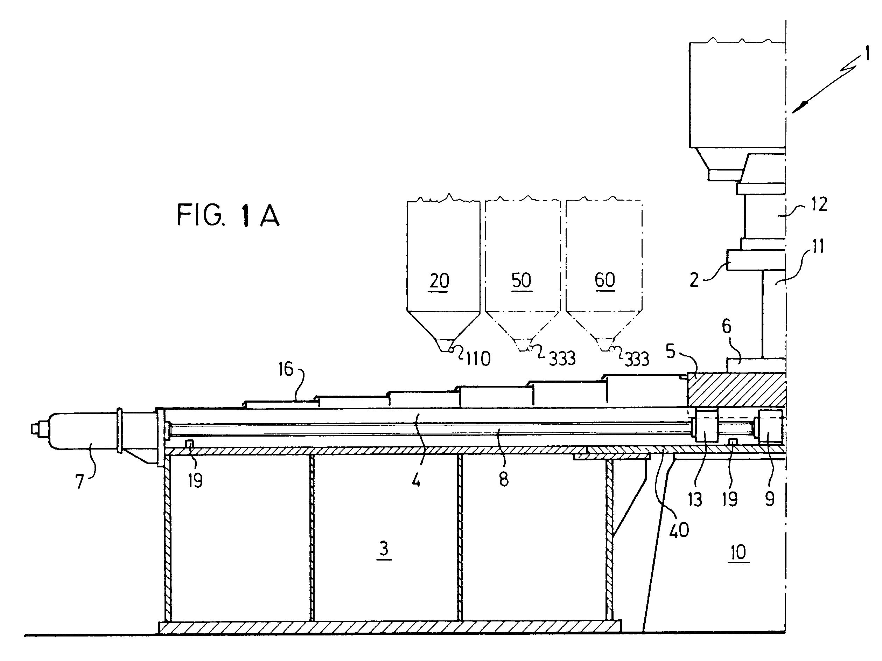

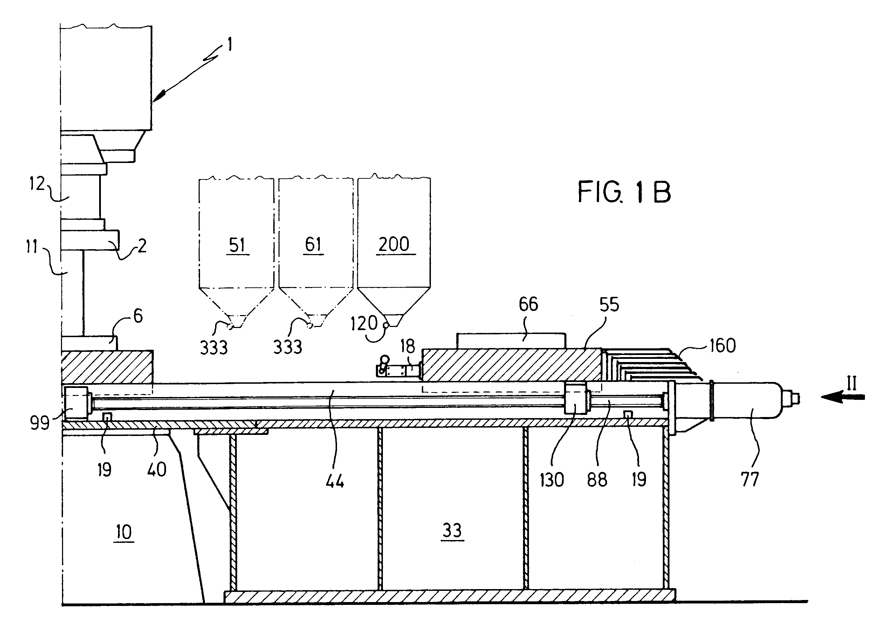

Said figures, and in particular Figures 1A and 1B, show a ceramic press 1 (preferably of hydraulic type for the reasons which will be apparent hereinafter).

From the bed 10 of said press 1 there extend two robust vertical cylindrical columns 11 on which a vertically movable horizontal cross-member 12 is slidingly mounted and carries fixed to its underside the upper part 2 of a ceramic mould. On one side and the other of said bed (see Figures 1A, 1B) there are two mutually aligned robust horizontal press tables which are connected together by a robust intermediate plate (40) fixed onto the bed 10, and extend perpendicular to the vertical axis of symmetry of the press 1 in which the longitudinal axis of said cross-member lies.

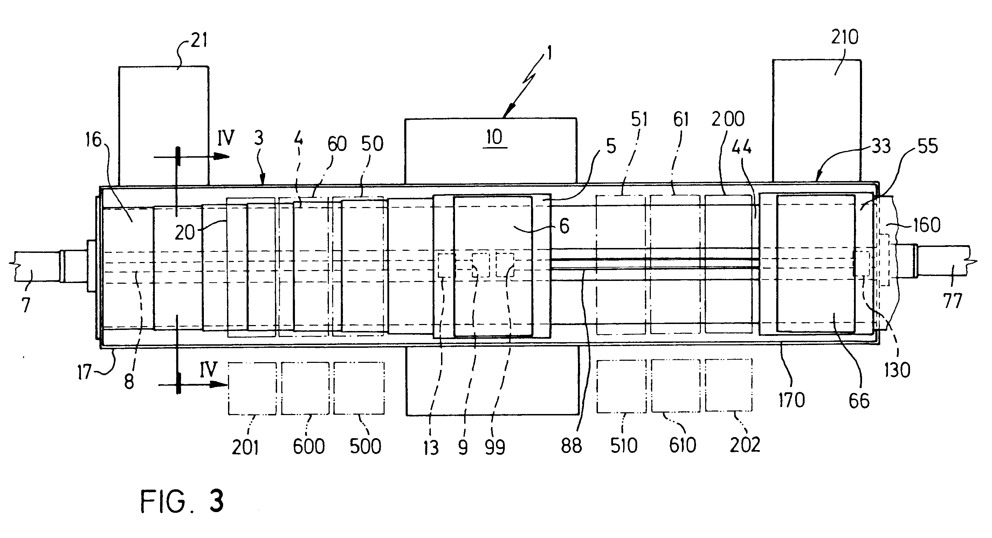

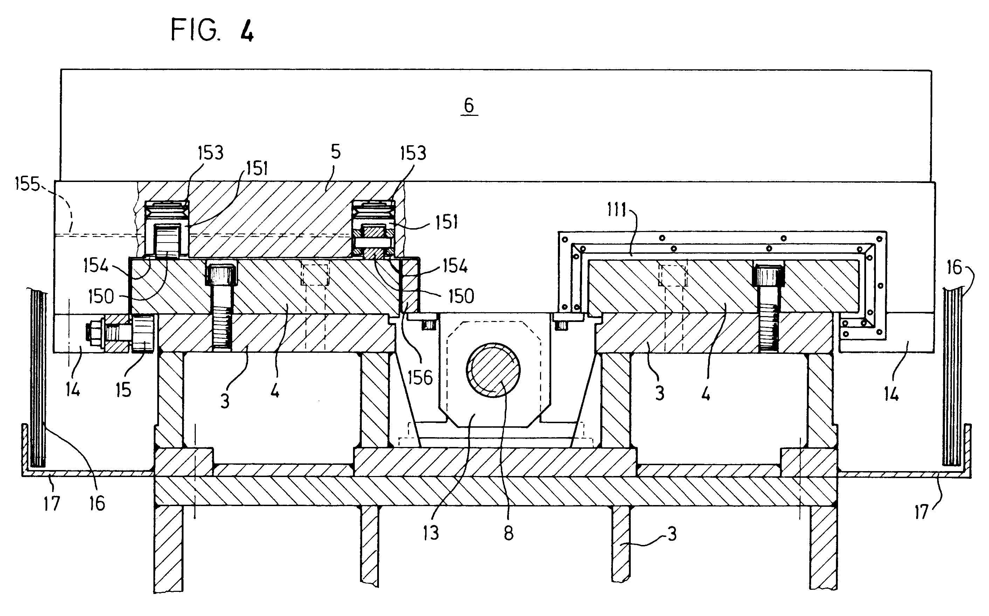

As can be seen, said press tables 3, 33 are provided upperly with respective slide tracks 4, 44 for corresponding carriages 5, 55 (see Figures 3, 4).

Removably fixed on said carriages 5 and 55 there are two lower mould parts 6, 66 which are conjugate to, or compatible with, the aforesaid mould part 2. It should be noted that the mould parts used can pertain to ceramic moulds of any known type. The following can for example be used:
A - moulds of the entering punch type (ie the type in which the exposed-face dies are associated with the lower die plate, which is stationary in height, whereas the reverse-face dies are associated with the mould part supported by the press cross-member);
B - moulds of the movable die plate or mirror-plate type (in which the reverse-face and exposed-face dies are arranged in the reverse manner to A, the die plate being lowered by the mould part fixed to said cross-member);
C - reverse mirror moulds, which have a movable die plate as in B, but have the reverse-face and exposed-face dies arranged as in A;
D - double mirror moulds, in which both the die plate, positioned below, and the counter-die, positioned above, are vertically movable relative to the corresponding reverse-face and exposed-face dies; and
E - further moulds deriving from the preceding, and differing from them only in minor details.

Further details of these moulds will not be discussed as these are well known to the expert of the art, and because they do not form a characterising part of the present invention.

With further reference to Figures 1A and 1B, these show two drive units 7 and 77 of the electronic card type, fixed to the end of said tracks 4 and 44 respectively.

Said drive units 7 and 77 rotate (in the two opposing directions of rotation) respective threaded shafts or screws 8 and 88, housed in corresponding central longitudinal seats provided on the corresponding tracks 4, 44 (see Figure 4).

At their other end, the screws 8, 88 are idly mounted on respective supports 9, 99, said carriages 5, 50 being coupled to the screws by corresponding lower lead nuts 13, 130.

From Figure 4 it will be seen that each carriage 5, 55 is coupled to the respective track 4, 44 by a prismatic slide coupling.

Specifically (Figure 4), each side portion of each carriage 5, 55 is provided lowerly with an inwardly projecting longitudinal ledge 14 housing in recesses a longitudinal series of wheels 15, such as needle roller bearings, the longitudinal horizontal axes of which are transverse to the sliding direction of the respective carriage 5, 55.

The upper surfaces of said wheels 15 project beyond the corresponding upper face of said ledge 14 to make contact (during the outward and return travel of the carriages) with the lower face of the overlying track part 4, 44.

In a position opposing said wheels 15 there are provided wheels 150 identical to the preceding, and with which respective vertical cylindrical sliders 151 are associated. These latter are constantly urged downwards by respective upper packs of cup springs 153, so that the wheels 150 support the carriages during their outward and return travel, underlying anti-withdrawal stops 154 being associated with said sliders 151.

In Figure 4 the reference numeral 155 indicates the lubrication circuit for said wheels 150, and 156 indicates shoes for the transverse centering of the carriages 5, 55.

From the figures it can also be seen that with each carriage 5, 55 there is associated a telescopic protection and safety hood 16, 160, having its most outer part connected to the respective carriage 5, 55 and its most inner part connected to the support for the drive unit 7, 77. Each hood 16, 160 is conveniently pressurized with air to prevent inconvenient dust infiltration.

With further reference to Figure 4, the descending walls of said hoods are received in respective longitudinal channels 17, 170 fixed to project from the sides of said beds 3, 33, said channels 17, 170 being also arranged to receive the hydraulic and electrical service connections to the lower mould parts, 6 and 66 respectively.

In Figures 1A and 1B the reference numerals 18 and 19 schematically indicate feeler members and limit stops respectively, which cooperate with the drive units 7 and 77 to ensure perfect coordination of the operating stages of the invention. In addition, the reference numeral 111 in Figure 4 indicates a transverse scraper band associated with the carriage 5 or 55 to keep the upper face of the track 4 or 44 clean.

Finally, the clay is loaded into the cavities (not shown) of the mould parts 6 and 66 by respective hoppers 20 and 200, lowerly provided with convenient valve means (of known type), and lying above the central region of said two tracks 4 and 44 (see Figure 3).

Said hoppers 20, 200 can contain a mixture of clay and ceramic glaze in powder form, or coating mix.

Again with reference to Figure 3, to the side of the end of the return travel position of said carriages 5 and 55 there are two discharge and removal devices 21, 210 for the pressed tiles.

The operation of the invention in the aforedescribed embodiment is apparent.

In this respect the to-and-fro motion of the carriages 5 and 55 is such that when one, 5 or 55, is temporarily at rest below the cross-member 12, the other, 55 or 5, is temporarily at rest in front of the corresponding discharge device 210 or 21 for the tiles (not shown). In addition, during the pressing, ie during the descent of the upper mould part 2, the carriage 5 or 55 rests on the underlying track 4 or 44, with the wheels 150 having withdrawn into their seats and the wheels 15 having lost contact with the immediate face of the overlying track 4 or 44.

It should be noted that the clay (or the clay mixed with glazing powder or coating mixture) is loaded into the cavity or cavities of the lower mould parts 6 or 66 during the outward travel of these latter, ie while they are moving towards the press 1, but there is no reason why they should not be temporarily halted if special circumstances require it.

In either case, as can be seen in Figures 1A and 1B, the discharge ports of the hoppers 20 and 200 are associated with respective suction units 110 and 120 arranged to cooperate with corresponding scrapers (not shown) to remove any clay particles from the upper face of the lower mould parts 6, 66.

As stated in the introduction, the invention is suitable for manufacturing tiles other than simple supports. For this purpose, as shown in Figures 1A and 1B, between the press 1 and the hoppers 20 and 200 there are provided corresponding pairs of hoppers 50, 60 and 51, 61, indicated by dashed and dotted lines in said figures, to contain suitable glaze in powder form or coating mixes.

For example the first 50 and 51 can contain base powdered glazes or mixes, and the second 60 and 61 can contain powdered glaze for finishing or covering.

As in the case of the hoppers 20, 200 for the support clay, said hoppers 50, 51, 60, 61 for the powdered glaze or coating mix are provided lowerly with respective suction units (or chambers) 333.

Said powdered glaze or coating mixes are preferably loaded during the outward travel of the conjugate mould parts 6 and 66, and this loading can again be done with the conjugate mould parts 6, 66 temporarily at rest if special production requirements have to be satisfied. This can for example be necessary if the exposed surface of the tile is to be given a particular appearance, such as strips or bands or the like with a colour or tonality different from that of the base glaze.

Usual charging carriages both for the clay and for the glaze can be convenient for this purpose, said carriages (not shown as they are of known type) being associated with respective hoppers 201, 600, 500; 202, 610, 510, which in Figure 3 are represented by dashed and double dotted lines to the side of the respective slide tracks 4 and 44 for the carriages 5, 55.

No description will be given of the vertical movements undergone by the dies associated with the forming cavities of the conjugate mould parts 6 and 66 either before the loading of the clay and glaze or before the discharge of the pressed tiles, because these movements depend on the type of mould used and the type of material processed, and because they depend on the number of loadings made.

The merits and advantages of the invention, its use and its operation are apparent from the aforegoing and from an examination of the accompanying figures.

## Claims

1. A plant for pressing ceramic tiles in general, characterised by comprising a ceramic press (1), the vertically movable cross-member (12) of which carries fixed to its lower side a first part (2) of a ceramic mould, whereas two identical mould parts (6), (66) conjugate with the preceding (2) are associated with its bed (10), these parts being positioned on one side and the other of the vertical plane of press symmetry in which the Longitudinal axis of said cross-member (12) lies, and being driven with horizontal rectilinear to-and-fro movements perpendicular to said vertical plane of symmetry, said two conjugate mould parts (6, 66) moving alternately in one direction and the other such that when one, (6) or (66), of said two conjugate mould parts is at the end of its stroke of travel for discharging the formed tiles, the other conjugate mould part, (66) or (6), having been previously loaded at least with clay, is at the end of its stroke of travel for pressing.

2. A plant as claimed in claim 1, characterised in that said two conjugate mould parts (6) and (66) are disposed on respective carriages (5) and (55), these latter being slidingly mounted on respective tracks (4) and (44) and being driven by respective drive units (7) and (77) by way of corresponding screw-nut devices (8, 13) and (88, 130).

3. A plant as claimed in the preceding claims, characterised in that each of said carriages (5), (55) is slidingly mounted on the corresponding track (4), (44) by way of a plurality of lower idle retention wheels (15) with their axis horizontal and transverse to the running direction, and by way of a plurality of upper idle support wheels (150), these latter being constantly loaded elastically downwards so that they project slightly beyond the corresponding lower face of the respective carriage (5), (55) during the transfer travel of this latter.

4. A plant as claimed in the preceding claims, characterised in that the clay is loaded into the cavities of said two conjugate mould parts (6), (66) by respective hoppers (20), (200) positioned above the path followed by said conjugate mould parts and lowerly provided with discharge valve means, scraper elements and respective suction chambers (110), (120) for removing excess clay.

5. A plant as claimed in the preceding claims, typically for forming pressure-glazed tiles, characterised in that with each carriage (5), (55) there is associated at least one hopper (50), (51) for containing powdered glaze or coating mix, which is positioned between said hopper (20), (200) and said press (1) above the path followed by the respective carriage (5), (55), and is lowerly provided with discharge valve means, scraper elements and a suction chamber (333) for removing excess powdered glaze or coating mix.

6. A plant as claimed in the preceding claims, characterised in that respective discharge devices (21), (210) for the pressed tiles are positioned at the end of the return or withdrawal travel path of said carriages (5), (55).

7. A plant as claimed in the preceding claims, characterised in that a respective longitudinal telescopic hood (16), (160) is associated with each carriage (5), (55) to cover the corresponding tracks (4), (44), said hood being fed with pressurized air to prevent dust infiltration.
